# EUROPEAN PATENT SPECIFICATION

(11) **EP 4 404 365 B1**
(45) Date of publication and mention of the grant of the patent: **16.09.2026**
(21) Application number: 22943355.2
(22) Date of filing: 05.07.2022
(51) Int. Cl.: H01M 50/392, H01M 50/244, H01M 50/249, H01M 50/367, H01M 10/04, H01M 10/058, H01M 50/627, H01M 50/60

(54) **HOUSING FOR BATTERY CELL, BATTERY CELL, BATTERY, AND ELECTRIC DEVICE**
GEHÄUSE FÜR BATTERIEZELLE, BATTERIEZELLE, BATTERIE UND ELEKTRISCHE VORRICHTUNG
BOÎTIER POUR ÉLÉMENT DE BATTERIE, ÉLÉMENT DE BATTERIE, BATTERIE ET DISPOSITIF ÉLECTRIQUE

(30) Priority: 23.05.2022 CN 202221235154 U
(43) Date of publication of application: 24.07.2024
(73) Proprietor: Contemporary Amperex Technology (Hong Kong) Limited, Central, Central And Western District (HK)
(72) Inventor: WANG, Wenxuan, Ningde, Fujian 352100 (CN); WANG, Guobao, Ningde, Fujian 352100 (CN); CAO, Jiao, Ningde, Fujian 352100 (CN); ZHAO, Xin, Ningde, Fujian 352100 (CN); PU, Chenkai, Ningde, Fujian 352100 (CN)
(74) Representative: Holt, Lucy Rose
(86) International application number: PCT/CN2022/103983
(87) International publication number: WO 2023/226164

(56) References cited:
- EP-A1- 0 858 116
- CN-U- 208 608 247
- CN-U- 208 608 247
- CN-U- 208 608 296
- CN-U- 210 723 102
- CN-U- 213 782 111
- US-A- 3 899 358
- US-A1- 2009 061 290
- US-A1- 2014 147 733

## Description

### TECHNICAL FIELD

The present disclosure relates to the technology field of batteries, and more particularly, relates to a housing for a battery cell, a battery cell, a battery, and an electric device.

### BACKGROUND

With the rapid development of clean energy and the national policy support for the field of new energy, power batteries with high voltage, high energy density and long cycle life have attracted much attention. Power batteries are not only used in energy storage power supply systems such as hydropower stations, thermal power stations, wind power stations and solar power stations, but also widely used in electric transportation means such as electric bicycles, electric motorcycles and electric vehicles, as well as in military equipment and aerospace and other fields. The market demand for power batteries is also constantly increasing with the continuous expansion of the application fields.

The manufacture and production of a power battery consists of a series of processing steps, including: electrode sheet production process, battery assembly process, and processes of liquid injection, formation, aging and etc. Battery formation is a very important step in the production. The formation process is mainly the process of the initial charge of the battery after being liquid injected and rested to form a solid electrolyte interface film. With the progress of the charge, voltage rises inside the battery along with gases generation, and the generated gases need to be withdrawn immediately. But in practice, the electrolyte will also be withdrawn while the gases are withdrawn, resulting in loss of large amount of electrolyte, and seriously affecting the battery performance. CN 208608247 U discloses a supporting structure for a square power battery. US3899358A discloses a filter cap for a storage battery of the type which gives off gases during its work cycle. The filter cap separates droplets of liquid from the gases and allows the droplets to return to the battery.

### SUMMARY

This disclosure is intended to address at least one of the technical problems existing in the prior art. To this end, one object of the present disclosure is to provide a housing for a battery cell to improve the issue of electrolyte loss during the formation. In accordance with the present invention, there is provided a housing for a battery cell as recited by claim 1, a battery cell as recited by claim 9, a battery as recited by claim 10, and an electric device as recited by claim 11. Preferred features are set out in the dependent claims.

In a first aspect, the embodiments of this invention provide a housing for a battery cell, a containment chamber is formed inside the housing for containing electrolyte, the housing includes a gas withdrawal structure, through which gases in the containment chamber can be withdrawn, and the gas withdrawal structure includes: a gas withdrawal hole arranged on the housing; and a liquid retaining structure cooperating with the gas withdrawal hole, arranged in the containment chamber, the liquid retaining structure is configured to prevent the electrolyte from being withdrawn from the gas withdrawal hole, where the liquid retaining structure includes: a first body, which is a hollow structure; and a liquid stopper arranged in the first body.

In the technical solutions of the embodiments of this disclosure, in the case where the gases are withdrawn from the inside of the housing, the liquid retaining structure may prevent the electrolyte from being withdrawn, thereby reducing the electrolyte loss and improving the battery performance.

According to the invention, , the liquid retaining structure includes: a first body, which is a hollow structure; a first through hole and at least one second through hole arranged on the first body and in communication with inside of the first body, the first through hole being in communication with the gas withdrawal hole; and a liquid stopper arranged in the first body, the liquid stopper is configured to prevent the electrolyte, which has entered into the first body through the at least one second through hole, from being withdrawn from the gas withdrawal hole. The hollow first body, the first through hole and the second through hole may provide a passage for the gases. The liquid stopper in the first body may ensure the smooth discharge of the gases during the formation process, and prevent the electrolyte from being withdrawn, reducing the electrolyte loss and improving the battery performance.

According to the invention, the liquid stopper may include multiple spheres, which are used to move around in random patterns within the first body to prevent the electrolyte from being withdrawn from the gas withdrawal hole. During the formation process, the gases can be withdrawn from the inside of the housing through a passage consisting of the second through hole, the hollow first body and the first through hole. The multiple spheres move around in random patterns due to the gas flow and prevent the electrolyte from being withdrawn from the gas withdrawal hole, reducing the electrolyte loss and improving the battery performance. In the case where there is no gas in the housing (for example, the gases in the housing have been totally withdrawn), the spheres may block the gas withdrawal hole due to the suction force, and further prevent the electrolyte from being withdrawn.

In some embodiments not according to the invention, the liquid stopper may include multiple baffles arranged on two opposite side walls of the first body, wherein the first through hole is arranged on a top wall of the first body adjacent to the two side walls, and the projections of at least two baffles on a plane where the top wall is located overlap, such that the baffles can prevent the electrolyte from being withdrawn from the gas withdrawal hole, where at least two baffles are located on the two opposite side walls of the first body. During the formation process, the gases can be withdrawn from the inside of the housing through a passage consisting of the second through hole, the hollow first body and the first through hole. By arranging the multiple baffles, a bent gas passage is formed to allow the gases to pass through to be withdrawn and prevent the electrolyte from being withdrawn through the gas withdrawal hole, reducing the electrolyte loss and improving the battery performance. In the case where there is no gas in the housing (for example, the gases in the housing have been totally withdrawn), the bent gas passage can also prevent the electrolyte from being withdrawn.

In some embodiments not according to the invention, the multiple baffles are arranged alternatively in a direction perpendicular to the top wall. The multiple baffles located on the two opposite side walls are arranged alternatively, which may increase the cooperation of the adjacent baffles in the direction perpendicular to the top wall, so as to more effectively prevent the electrolyte from being withdrawn during the formation process.

In some embodiments, the first body includes opposite first and second ends, the first through hole is arranged on the first end, and the at least one second through hole is arranged on a side wall of the first body between the first end and the second end. The at least one second through hole is arranged on the side wall of the first body, which allows the gases in the housing to be more easily withdrawn from the inside of the housing through the passage consisting of the second through hole, the hollow first body and the first through hole, speed up the gas withdrawal and facilitate the liquid stopper to prevent the electrolyte from being withdrawn.

In some embodiments, the second end may be a closed end, or the second end may be provided with multiple third through holes. In the case where the second end of the first body is a closed end, the gases are discharged from the inside of the housing through the passage consisting of the second through hole, the hollow first body and the first through hole. The second end, which functions as a closed end, and the liquid stopper prevent the electrolyte from being withdrawn together. In the case where the second end is provided with multiple third through holes, the gases are discharged from the inside of the housing through the passage consisting of the second through hole, the third through holes, the hollow first body and the first through hole, which further speed up the gas withdrawal.

In some embodiments, the liquid stopper includes multiple spheres, each of which has a diameter greater than an inner diameter of the third through holes. The diameter of each sphere greater than the inner diameter of the third through holes may prevent the liquid stopper, which is the sphere, from escaping from the first body.

In some embodiments, each of the speres has a diameter greater than an inner diameter of the second through hole. The diameter of each sphere greater than the inner diameter of the second through hole may prevent the liquid stopper, which is the sphere, from escaping from the first body.

In some embodiments, the number of the multiple spheres is 2 to 20. The number of the spheres in the first body being in a range of 2 to 20 facilitates the spheres to collide with each other due to the gas flow during the formation process, so as to move around in random patterns, preventing the electrolyte from being withdrawn, reducing the electrolyte loss, and improving the battery performance.

In some embodiments, the number of the multiple spheres is 3 to 5. The number of the spheres in the first body being in a range of 3 to 5 allows the spheres to move around in random patterns to prevent the electrolyte from being withdrawn, but not prevent the gases from being withdrawn.

In some embodiments, the diameter of each sphere is greater than the inner diameter of the gas withdrawal hole. The diameter of each sphere greater than the inner diameter of the gas withdrawal hole may prevent the liquid stopper, which is the sphere, from escaping from the first body to the outside of the housing.

In some embodiments, the housing further includes a liquid injection hole through which the electrolyte is injected into the containment chamber, the gas withdrawal hole and the liquid injection hole are a same hole on the housing in communication with the containment chamber. The gas withdrawal hole being also used as the liquid injection hole simplifies the production process of the housing and reduces the production cost of the housing. When injected from the through hole, the electrolyte may be dispersed by the first body and the liquid stopper in the first body, which thus reduces the impact on the cell assembly (such as the electrode sheets and the separator) in the housing, protects the cell assembly, and at the same time facilitates the infiltration of the electrolyte and improves the battery performance.

In some embodiments, the housing may include a housing body with an opening and an end cover covering at the opening, the containment chamber is formed between the housing body and the end cover, where the liquid retaining structure is integrated with the end cover or installed on the end cover through a fastener. The liquid retaining structure being integrated with the end cover may simplify the production process of the housing. The liquid retaining structure being installed on the end cover through a fastener may increase the flexibility in using the housing. In the case where the liquid retaining structure is damaged, it can be replaced in time so as to reduce the maintenance cost.

In some embodiments, the gas withdrawal structure may further include: a second body engaging with the end cover, installed on the end cover through a fastener, where the liquid retaining structure is integrated with the second body. In the case where the liquid retaining structure is integrated with the second body, and the second body is installed on the end cover through a fastener, it is possible to replace the liquid retaining structure in time when it is damaged, reducing the maintenance cost. The liquid retaining structure cooperating with the end cover through the second body increases the operation area of the liquid retaining structure and the end cover, reduces the probability of damage at the interface between the liquid retaining structure and the end cover, and increases the service life of the housing.

In a second aspect, the embodiments of this disclosure provide a battery cell including the housing in the above embodiments.

In a third aspect, the embodiments of this disclosure provide a battery including the battery cell in the above embodiments.

In a first aspect, the embodiments of this disclosure provide an electric device including the battery in the above embodiments.

The above description is only an overview of the technical solutions of the present disclosure. For purposes of better understanding the technical means of the present disclosure, the implementation in accordance with the contents of the specification, and making the above and other purposes, features and advantages of the present disclosure more apparent, the specific implementations of the present disclosure are given below.

### BRIEF DESCRIPTION OF THE DRAWINGS

In order to more clearly explain the technical solutions in the embodiments of the present disclosure, the following provides a brief description of the attached drawings necessary in the embodiments of this disclosure. The drawings described below are only some embodiments of the present disclosure.

In the attached drawings, unless otherwise specified, identical reference numbers throughout multiple drawings indicate identical or similar parts or elements. These drawings are not necessarily drawn to scale. It should be understood that these drawings illustrate only some of the implementations disclosed according to this disclosure.
FIG. 1 is a schematic structure diagram of a vehicle of some embodiments of this disclosure;
FIG. 2 is an explosive view of a battery of some embodiments of this disclosure;
FIG. 3 is a schematic explosive view of a battery cell of some embodiments of this disclosure;
FIG. 4A is a schematic top view of a housing for a battery cell of some embodiments of this disclosure;
FIG. 4B is a schematic partial section view along I-I' in FIG. 4A;
FIG. 5A is a schematic side view of a liquid retaining structure of some embodiments of this disclosure;
FIG. 5B is a schematic side view of a liquid retaining structure of some embodiments of this disclosure;
FIG. 6 is a schematic side view of a liquid retaining structure of some embodiments of this invention;
FIG. 7 is a schematic structure diagram of a liquid retaining structure of some embodiments of this invention;
FIG. 8 is schematic structure diagram of a liquid retaining structure of some embodiments of this invention;
FIG. 9 is a schematic explosive view of a gas withdrawal structure of some embodiments of this disclosure.

The reference numbers are as follows:
vehicle 10;
battery 100, controller 200, motor 300;
box 110, battery cell 120, first part 110A, second part 110B;
housing 1000, cell assembly 2000;
end cover 1100, housing body 1200, containment chamber 1300, gas withdrawal structure 1400;
gas withdrawal hole 1410, liquid retaining structure 1420, second body 1430,
first body 1421, first through hole 1422, second through hole 1423, liquid stopper 1424,
first end 1421A, second end 1421B, third through hole 1425.

### DETAILED DESCRIPTION OF THE EMBODIMENTS

The embodiments of the technical solutions of this disclosure will be described in detail in combination with the attached drawings below. The following embodiments and drawings are intended only to more clearly describe the technical solutions of the present disclosure and are therefore used as examples only and cannot be used to limit the scope of protection of the present disclosure. The drawings are indicative only of the parts relating to the technical solutions of the disclosure, which do not represent the actual structure of the product as such.

Unless otherwise defined, all technical and scientific terms used herein have the same meaning as those generally understood by those skilled in the technical field of this disclosure. The terms used herein are for the purpose of describing specific embodiments only and are not intended to limit the disclosure. The terms "including" and "having" and any variations thereof in the specification, claims and the above description of the drawings of this disclosure are intended to cover non-exclusive inclusion.

In the description of the embodiments of this disclosure, the technical terms "first", "second", and etc., are used only to distinguish between different objects and are not to be construed as indicating or implying relative importance or as implicitly indicating the quantity, particular order or priorities of the indicated technical features. In the description of the embodiments of this disclosure, "multiple" means more than two, similarly, "multiple sets" means more than two sets (including two sets), and "multiple pieces" means more than two pieces (including two pieces).

Reference to "embodiments" herein means that a particular feature, structure or characteristic described in conjunction with an embodiment may be included in at least one embodiment of this disclosure. The presence of the phrase at various positions in the specification does not necessarily refer to a same embodiment, nor is it an independent or alternative embodiment mutually exclusive with other embodiments.

In the description of the embodiments of this disclosure, the term "and/or" is merely an associative relationship describing associated objects, indicating that there can be three relationships, for example, A and/or B can indicate the following three cases: A alone, both A and B, and B alone. In addition, the character "/" herein generally means that the associated objects are in an "or" relationship.

In the description of the embodiments of this disclosure, the technical terms "center", "longitudinal", "lateral", "length", "width", "thickness", "up", "down", "front", "back", "left", "right", "vertical" "horizontal", "top", "bottom", "inside", "outside", "clockwise", "anticlockwise", "axial", "radial", "circumferential" and etc. indicates a location or position relationship which is the location or position relationship shown in the drawings. They are used only for the convenience of describing and simplifying the description of the embodiments of this disclosure, and not to indicate or imply that the device or element referred to must have a specific orientation, or be constructed and operated in a specific orientation, and therefore cannot be construed as a limitation of the embodiments of this disclosure.

In the description of the embodiments of this disclosure, unless otherwise expressly specified and limited, the technical terms "installation", "connection", "linkage", "fixation" and etc. shall be construed in a broad sense, for example, it may be a fixed connection, or a detachable connection, or an one-piece integration; it may be a mechanical connection or an electrical connection; it may be a direct connection, also may be an indirect connection through an intermediate medium, and it may be the connection within two components or an interaction between two components. For those skilled in the art, the specific meaning of the above terms in the embodiments of this disclosure may be understood on a case-by-case basis.

As mentioned above, in the processing steps of the production of the battery (for example, the battery formation process), gases will be generated inside the battery, and the generated gases need to be withdrawn immediately, otherwise the gases will react with the electrolyte, which will seriously affect the battery performance.

The applicant has noted that in practice, the electrolyte will also be withdrawn while the gases are withdrawn, which results in loss of large amount of electrolyte. Therefore, the electrolyte must be replenished after the gases have been withdrawn, which reduces the production efficiency. Further, although the electrolyte may be replenished to compensate the loss, the infiltration of the electrolyte on the electrode sheets might be affect if the electrolyte has not been replenished in time, and it will adversely affect the performance and service life of the battery.

In order to alleviate the loss of electrolyte in the formation process, the applicant has found that the housing of the battery cell may be designed to include a liquid retaining structure, and by arranging the liquid retaining structure at the gas withdrawal hole, it is possible that the gases in the housing can be smoothly discharged through the liquid retaining structure in the formation process while the electrolyte is blocked by the liquid retaining structure and falls back inside the housing.

In a battery cell including such housing, loss of large amounts of electrolyte may be avoided in the battery production process due to the liquid retaining structure, which not only improves the production efficiency, but also ensures the performance and service life of the battery.

The housing for a battery cell, the battery cell including the housing and the battery disclosed in the embodiments of the present disclosure may, but is not limited to, be used in electric devices such as vehicles, ships or aircrafts. It is possible to use the housing for a battery cell, the battery cell including the housing and the battery disclosed in this disclosure, and others to assembly a power supply system of the electric device, which facilitates alleviating the adverse effects on the performance of the battery resulted from the loss of electrolyte during the production process of the battery and improving the stability and life of the battery.

The embodiments of this disclosure provide an electric device using a battery as a power supply. The electric device may be but not limited to a mobile phone, a tablet, a laptop computer, an electric toy, an electric tool, an electric vehicle, an electric car, a ship, a spacecraft, etc. Among them, electric toys can include fixed or movable electric toys, such as game consoles, electric car toys, electric ship toys and electric aircraft toys, spacecrafts can include aircrafts, rockets, space shuttles and spacecrafts, etc.

For the convenience of illustration, the following embodiments explain in an example where the electric device of some embodiments of this disclosure is a vehicle 10.

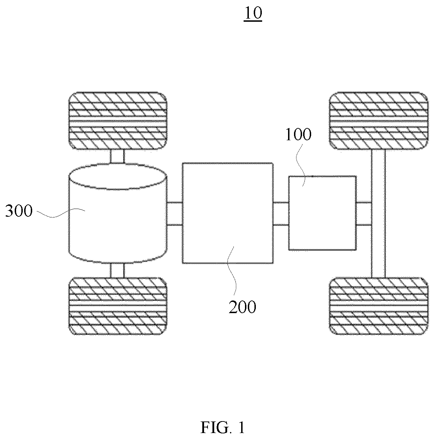

Please refer to FIG. 1, which is a schematic structure diagram of a vehicle 10 provided in some embodiments of this disclosure. The vehicle 10 may be a fuel vehicle, a gas vehicle or a new energy vehicle, and the new energy vehicle may be a pure electric vehicle, a hybrid electric vehicle or an extended-range electric vehicle, etc. Inside the vehicle 10 a battery 100 is arranged, and the battery 100 may be arranged at the bottom, the head or the rear of the vehicle 10. The battery 100 may be used to power the vehicle 10, for example, the battery 100 may be used as an operational power supply of the vehicle 10. The vehicle 10 may also include a controller 200 and a motor 300, where the controller 200 is used to control the battery 100 to power the motor 300, for example, for supplying power necessary during the starting, the navigation and the travel of the vehicle 10.

In some embodiments of this disclosure, the battery 100 may be used not only as an operational power supply of the vehicle 10, but also as a drive power supply of the vehicle 10, to provide drive power to the vehicle 10 in place or partly in place of fuel or natural gas.

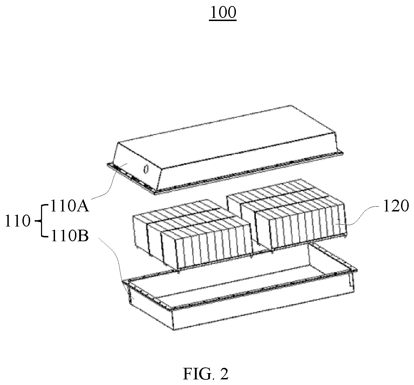

Please refer to FIG. 2, which is an explosive view of a battery 100 provided in some embodiments of this disclosure. The battery 100 includes a box 110 and a battery cell 120, where the battery cell 120 is contained in the box 110. In this case, the box 110 is used to provide a containment space for the battery cell 120, and the box 110 may adopt a variety of structures. In some embodiments, the box 110 may include a first part 110A and a second part 110B, where the first part 110A and the second part 110B engage with each other, and the first part 110A and the second part 110B define the containment space together for containing the battery cell 120. The second part 110B may be a hollow structure with an opening at one side, the first part 110A may be a plate structure, and the first part 110A covers the opening side of the second part 110B, so that the first part 110A and the second part 110B define the containment space together. The first part 110A and the second part 110B each may also be a hollow structure with an opening at one side, and the opening side of the first part 110A covers the opening side of the second part 110B. Of course, the box 110 formed by the first part 110A and the second part 110B may have a variety of shapes of, for example a cylinder, cuboid and so on.

In the battery 100, there may be multiple battery cells 120. The multiple battery cells 120 may be connected in series or in parallel or in series-parallel, where battery cells being connected in series-parallel refers to that the multiple battery cells 120 are series-connected in some parts and parallel in others. The multiple battery cells 120 may be directly connected in series or in parallel or in series-parallel together, and then the whole structure formed by the multiple battery cells 120 is contained in the box 110. Of course, the battery 100 may also be a whole structure formed by connecting in series or in parallel or in series-parallel multiple battery modules each formed by multiple battery cells 120 connected in series or in parallel or in series-parallel, and contained in the box 110. The battery 100 may also include other structures, for example, the battery 100 may also include a bus component for realizing the electrical connection among the multiple battery cells 120.

In this case, each battery cell 120 may be a secondary battery or a primary battery; may also be a lithium sulfur battery, a sodium ion battery or a magnesium ion battery, but is not limited to this. The battery cell 120 may be cylindrical, flat, cuboid or in other shapes.

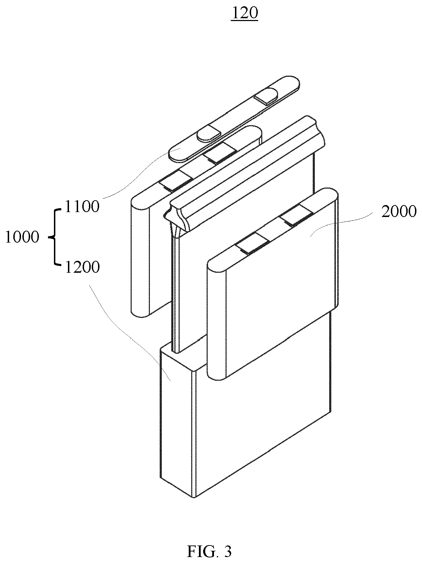

Please refer to FIG. 3, which is a schematic explosive view of a battery cell 120 provided in some embodiments of this disclosure. The battery cell 120 refers to the smallest unit that forms a battery. As shown in FIG. 3, the battery cell 120 may include a housing 1000 consisting of an end cover 1100 and a housing body 1200, a cell assembly 2000, and other functional components.

The end cover 1100 means a component which covers at the opening of the housing body 1200 to isolate the internal environment of the battery cell 120 from the external environment. Unlimitedly, the shape of the end cover 1100 may be adapted to the shape of the housing body 1200 to engage with the housing body 1200. In some embodiments, the end cover 1100 may be made of a material with a certain hardness and strength (such as aluminum alloy), so that the end cover 1100 is not prone to deformation when squeezed and collided, so that the battery cell 120 may have higher structural strength and the safety performance may also be improved. The end cover 1100 may be provided with functional components such as electrode terminals. The electrode terminals may be used for the electrical connection with the cell assembly 2000 to output or input electrical power of the battery cells 120. In some embodiments, the end cap 1100 may also be provided with a pressure relief mechanism for releasing internal pressure when the internal pressure or temperature of the battery cell 120 reaches a threshold value. The end cover 1100 may also be made of a variety of materials, such as copper, iron, aluminum, stainless steel, aluminum alloy, plastic, etc. There is no special limitation on it in the embodiments of this disclosure. In some embodiments, the inner side of the end cover 1100 may also be provided with an insulation part, which may be used to isolate the electrical connection parts in the housing body 1200 from the end cover 1100 to reduce the risk of short circuit. For example, the insulation part may be plastic, rubber, etc.

The housing body 1200 is a component for engaging with the end cover 1100 to form the internal environment of the battery cell 120, where the formed internal environment may be used to contain the cell assembly 2000, the electrolyte, and other components. The housing body 1200 and the end cover 1100 may be separate components, and it is possible to arrange an opening at the housing body1200 and cover the end cover 1100 at the opening to form the internal environment of the battery cell 120. Unlimitedly, it is also possible to integrate the end cover 1100 with the housing body 1200. Specifically, the end cover 1100 and the housing body 1200 may form a common connection surface before the other components are put into the housing, and the end cover 1100 is allowed to cover the housing body 1200 when it is necessary to enclose the interior of the housing body 1200. The housing body 1200 may have a variety of shapes and sizes, such as rectangular shape, cylindrical shape, hexagonal prism shape and so on. In particular, the housing body 1200 may be shaped according to the specific shape and size of the cell assembly 2000. The material of the housing body 1200 may be various, such as copper, iron, aluminum, stainless steel, aluminum alloy, plastic, and etc. The embodiments of this disclosure are not limited to this.

The cell assembly 2000 is a component of the battery cell 120 where an electrochemical reaction takes place. One or more cell components 2000 may be contained within the housing body 1200. The cell assembly 2000 is mainly formed by winding or stacking the positive and negative electrode sheets, with usually a separator disposed therebetween. The parts with the active substance in the positive and negative electrode sheets constitute the main part of the cell assembly, and the parts without the active substance in the positive and negative electrode sheets respectively constitute the tabs. The positive and negative electrode tabs may be all located at one end of the body part or respectively located at the two ends of the body part. During the charging and discharging of the battery, the positive and negative electrode active substances react with the electrolyte, and the tabs connect the electrode terminals to form current loops.

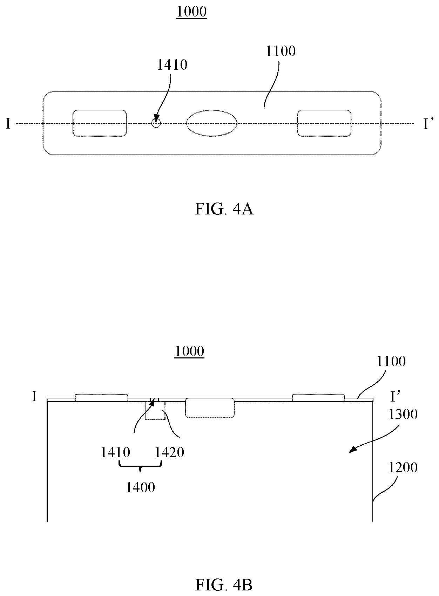

Please refer to FIG. 4A and FIG. 4B. FIG. 4A is a schematic top view of a housing 1000 for a battery cell provided in some embodiments of this disclosure, and FIG. 4B is a schematic partial section view along I-I' in FIG. 4A. Some embodiments of the present disclosure provide a housing 1000 for a battery cell. A containment chamber 1300 is formed inside the housing 1000 for containing the electrolyte. The housing 1000 includes a gas withdrawal structure 1400, through which the gases in the containment chamber 1300 can be withdrawn. The gas withdrawal structure 1400 includes: a gas withdrawal hole 1410 arranged on the housing 1000; a liquid retaining structure 1420 cooperating with the gas withdrawal hole 1410, arranged in the containment chamber 1300, and the liquid retaining structure 1420 is configured to prevent the electrolyte from being withdrawn from the gas withdrawal hole 1410.

The housing 1000 is a component that insulates the internal environment of the battery cell from the external environment. The housing 1000 may be in various shapes (e.g. rectangular shape, cylindrical shape, hexagonal shape, etc.) and various sizes. The gas withdrawal hole 1410 of the gas withdrawal structure 1400 is in communication with the containment chamber 1300 for discharging the excess gases from the housing 1000 to the outside during the formation process. The liquid retaining structure 1420 may be arranged under the gas withdrawal hole 1410, and the liquid retaining structure 1420 may be made of a lightweight, corrosion-resistant polymer material.

It should be understood that the electrolyte in the containment chamber 1300 may be blocked and not withdrawn with the gas flow due to the liquid retaining structure 1420 arranged under the gas withdrawal hole 1410 when the gases are withdrawn from inside of the housing 1000, which reduces the electrolyte loss.

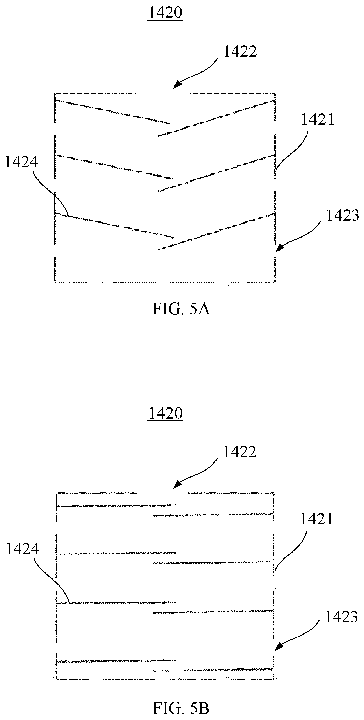

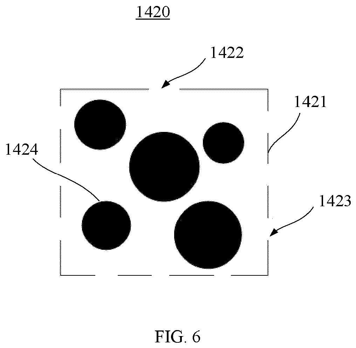

Please refer to FIGS. 5A, 5B and 6, which are schematic side views of a liquid retaining structure 1420 provided in some embodiments of this disclosure. According to some embodiments of this disclosure, the liquid retaining structure 1420 may include: a first body 1421, which is a hollow structure; a first through hole 1422 and at least one second through hole 1423, which are arranged on the first body 1421 and in communication with the inside of the first body 1421, and in which the first through hole 1422 is in communication with the gas withdrawal hole 1410; and a liquid stopper 1424, arranged in the first body 1421, where the liquid stopper 1424 is configured to prevent the electrolyte, which has entered into the first body 1421 through at least one second through hole 1423, from being withdrawn from the gas withdrawal hole 1410.

The shape of the first body 1421 may be but is not limited to cuboid, cube or round shape, etc. In some embodiments, in the case where the first body 1421 is cuboid or cube shape, the side length of the first body 1421 may be greater than or equal to 3 millimeters (mm) and less than or equal to 30 mm; in the case where the first body 1421 is round in shape, the radius of the first body 1421 may be greater than or equal to 3 mm and less than or equal to 30 mm. In some embodiments, in the case where the shape of the first body 1421 is cuboid or cube, the side length of the first body 1421 may be greater than or equal to 5 mm and less than or equal to 10 mm; in the case where the first body 1421 is round in shape, the radius of the first body 1421 may be greater than or equal to 5 mm and less than or equal to 10 mm. The second through hole 1423, the hollow first body 1421, and the first through hole 1422 may provide a passage for the gases.

In some embodiments, the number of the second through holes is multiple. The multiple second through holes may be arranged in a grid pattern, or may be arranged in other pattern or irregularly arranged. The first through hole 1422 and the second through hole 1423 may have, but are not limited to, circular shape, polygonal shape, regular grid shape, or irregular grid shape.

The liquid stopper 1424 may be connected or not connected with the first body 1421. In some embodiments, the liquid stopper 1424 may include multiple liquid sub-stoppers which may be configured to cooperate with each other to block the electrolyte from being withdrawn or to block the gas withdrawal hole 1410 in the case where there is no gas inside the housing 1000 (for example, the gases have been totally withdrawn).

The liquid stopper 1424 may be made of a lightweight, corrosion-resistant polymer material.

During the formation process, the liquid stopper 1424 in the first body 1421 may prevent the electrolyte from being withdrawn and allow it to fall back into the containment chamber 1300, which reduces the electrolyte loss and improves the battery performance. The liquid stopper 1424 may also block the gas withdrawal hole 1410 in the case where there is no gas inside the housing 1000 (for example, the gases have been totally withdrawn) to further prevent the electrolyte loss.

Please refer to FIG. 6. According to the invention, the liquid stopper 1424 includes multiple spheres, which are used to move around in random patterns within the first body 1421 to prevent the electrolyte from being withdrawn from the gas withdrawal hole.

The spheres may be made of a lightweight, corrosion-resistant polymer material, and capable of moving around in random patterns due to the gas flow during the gas withdrawal to prevent the electrolyte from being withdrawn from the gas withdrawal hole and to allow the gases to be withdrawn from the gas withdrawal hole. In the case where there is no gas in the containment chamber or where the gases have been totally withdrawn, the continuous gas withdrawal will make the electrolyte to flow to the gas withdrawal hole and drive the multiple spheres to block the gas withdrawal hole, thereby reducing the electrolyte loss.

The shape of the sphere may include a round sphere or a spheroid (for example, a rugby-shaped sphere). The shapes and dimensions of the multiple spheres may be same with or different from each other.

The multiple spheres may move around in random patterns due to the gas flow during the formation process, which may not only ensure the smooth discharge of the gases, but also block the electrolyte that is withdrawn together, change the movement direction of the electrolyte, so as to prevent the electrolyte from being withdrawn from the gas withdrawal hole 1410. In the case where there is no gas in the housing 1000 (for example, the gases have been totally withdrawn), the small spheres will gather at the gas withdrawal hole 1410 due to the suction force, and further prevent the electrolyte from being withdrawn.

Please refer to FIG. 5A and FIG. 5B. According to some other embodiments of this disclosure, the liquid stopper 1424 includes multiple baffles arranged on two opposite side walls of the first body 1421, where the first through hole is arranged on the top wall of the first body 1421 adjacent to the two side walls, and the projections of at least two baffles on the plane where the top wall is located overlap, such that the baffles can prevent the electrolyte from being withdrawn from the gas withdrawal hole 1410, and in this case at least two baffles are located on the two opposite side walls of the first body 1421.

One end of the baffle may be connected with the first body 1421, and the other end may be a free end. The shape of the baffles may be, but is not limited to, a regular or irregular sheet. The baffles may be disposed at an angle (FIG. 5A) or horizontally (FIG. 5B). Being horizontal means being parallel to the plane where the top wall of the first body 1421 is located, and being at an angle means that the angle between it and the plane where the top wall of the first body 1421 is located is greater than zero. The multiple baffles may form a bent gas passage to allow the gases to be withdrawn therethrough and prevent the electrolyte from being withdrawn through the gas withdrawal hole, or to block the gas withdrawal hole 1410 due to the suction force in the case where there is no gas in the housing 1000 (for example, the gases have totally been withdrawn).

The multiple baffles may form a bent gas passage, which may not only allow the gases to be discharged smoothly, but also block the electrolyte from being withdrawn together, or block the gas withdrawal hole 1410 due to the suction force in the case where there is no gas in the housing 1000 (for example, the gases have totally been withdrawn), to further prevent the electrolyte loss.

Please refer to FIG. 5A and FIG. 5B. According to some embodiments of this disclosure, the multiple baffles are arranged alternatively in a direction perpendicular to the top wall.

The multiple baffles being arranged alternatively means that two adjacent baffles in the direction perpendicular to the top wall are located on different side walls.

The multiple baffles located on the two opposite side walls are arranged alternatively, which may increase the cooperation of the adjacent baffles in the direction perpendicular to the top wall, so as to more effectively prevent the electrolyte from being withdrawn during the formation process.

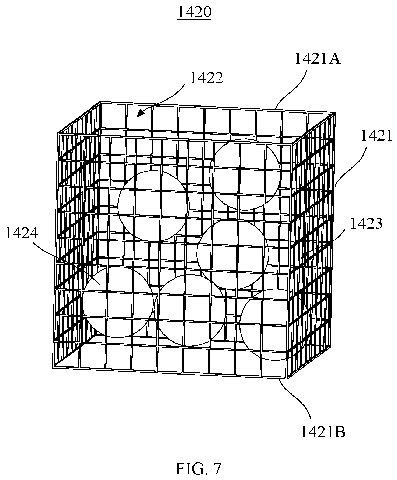

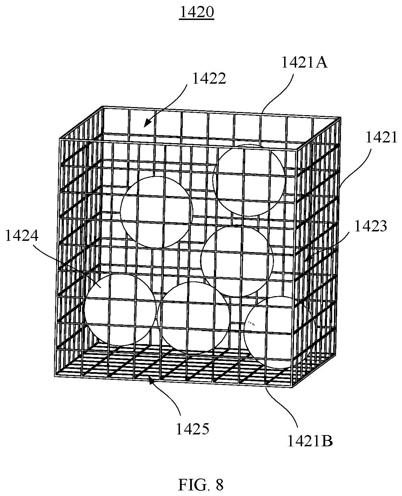

Please refer to FIGS. 7 and 8, which are schematic structure diagrams of a liquid retaining structure of some embodiments of this invention. According to some embodiments of this invention, the first body 1421 includes opposite first end 1421A and second end 1421B, the first through hole 1422 is arranged on the first end 1421A, and at least one second through hole 1423 is arranged on the side wall of the first body 1421 between the first end 1421A and the second end 1421B.

In FIGS. 7 and 8, the multiple through holes 1423 are shown to be arranged in a grid, but the shape of the multiple second through holes 1423 is not limited thereto.

The first end 1421A may be either an open end or a closed end. In the example illustrated in the figure, the first end 1421A is an open end, forming the first through hole 1422.

In the case where the gas withdrawal hole 1410 is also used as the injection hole for injection of the electrolyte, the second through hole 1423 is arranged on the side wall to prevent the impact of the electrolyte on the cell assembly.

Since at least one second through hole 1423 is located on the side wall of the first body 1421, the gas generated during the battery production may rise to around the liquid retaining structure 1420, which facilitates preventing the electrolyte from being withdrawn, and may be easily discharged from the inside of the housing body through a passage consisting of the second through hole 1423, the hollow first body 1421 and the first through hole 1422.

According to some embodiments of this invention, the second end 1421B is a closed end, or the second end 1421B is provided with multiple third through holes 1425.

The shape of the third through holes 1425 may be, but are not limited to, a circular shape, polygon shape, regular or irregular grid shape, etc.

In the case where the second end 1421B of the first body 1421 is a closed end, the gases are discharged from the inside of the housing through the passage consisting of the second through hole 1423, the hollow first body 1421 and the first through hole 1422. The second end 1421B, which functions as a closed end, and the liquid stopper 1424 prevent the electrolyte from being withdrawn together. In the case where the second end 1421B is provided with multiple third through holes 1425, the gases are discharged from the inside of the housing body through the passage consisting of the second through hole 1423, the third through holes 1425, the hollow first body 1421 and the first through hole 1422, which further speed up the gas withdrawal.

According to some embodiments of this invention, the liquid stopper 1424 includes multiple spheres, each of which has a diameter greater than the inner diameter of the third through holes 1425.

In some embodiments, the inner diameter of the third through holes 1425 may be greater than or equal to 0.5 mm and less than or equal to 10 mm. In some other embodiments, the diameter of the third through hole 1425 may be greater than or equal to 1 mm and less than or equal to 3 mm. In some embodiments, the diameter of the spheres may be greater than or equal to 1 mm and less than or equal to 10 mm. In some other embodiments, the diameter of the spheres may be greater than or equal to 1.5 mm and less than or equal to 3.5 mm.

The diameter of each sphere is greater than the inner diameter of the third through hole 1425 to prevent the liquid stopper1424, which is the sphere, from escaping from the first body 1421.

According to some embodiments of this invention, the diameter of each sphere is greater than the inner diameter of the second through hole 1423.

In some embodiments, the inner diameter of the second through hole 1423 may be greater than or equal to 0.5 mm and less than or equal to 10 mm. In some other embodiments, the inner diameter of the second through hole 1423 may be greater than or equal to 1 mm and less than or equal to 3 mm. In some embodiments, the diameter of the spheres may be greater than or equal to 1 mm and less than or equal to 10 mm. In some other embodiments, the diameter of the spheres may be greater than or equal to 1.5 mm and less than or equal to 3.5 mm.

The diameter of each sphere is greater than the inner diameter of the second through hole 1423 prevents the liquid stopper 1424, which is the sphere, from escaping from the first body 1421.

According to some embodiments of this invention, the number of the multiple spheres is 2 to 20.

The number of the multiple spheres being 2 to 20 means that the number of the spheres is greater than or equal to 2 and less than or equal to 20.

The number of the spheres in the first body 1421 is in a range of 2 to 20, which facilitates the spheres to collide with each other due to the gas flow during the formation process, so as to move around in random patterns, preventing the electrolyte from being withdrawn, reducing the electrolyte loss, and improving the battery performance.

According to some embodiments of this invention, the number of the multiple spheres is 3 to 5.

The number of the multiple spheres being 3 to 5 means that the number of the spheres is greater than or equal to 3 and less than or equal to 5.

The number of the spheres in the first body 1421 is in a range of 3 to 5, so that the spheres may move around in random patterns to prevent the electrolyte from being withdrawn, but not prevent the gases from being withdrawn.

According to some embodiments of this invention, the diameter of each sphere is greater than the inner diameter of the gas withdrawal hole 1410.

In some embodiments, the inner diameter of the gas withdrawal hole 1410 may be greater than or equal to 1 mm and less than or equal to 3 mm. In some other embodiments, the inner diameter of the gas withdrawal hole 1410 may be 2 mm. In some embodiments, the diameter of the spheres may be greater than or equal to 1 mm and less than or equal to 10 mm. In some other embodiments, the diameter of the spheres may be greater than or equal to 1.5 mm and less than or equal to 3.5 mm.

The diameter of each sphere is greater than the inner diameter of the gas withdrawal hole 1410 may prevent the liquid stopper 1424, which is the sphere, from escaping from the first body 1421 to the outside of the housing 1000.

According to some embodiments of the present invention, the housing 1000 further includes a liquid injection hole through which the electrolyte is injected into the containment chamber 1300. The gas withdrawal hole 1410 and the liquid injection hole may be the same hole on the housing 1000 in communication with the containment chamber 1300.

The gas withdrawal hole 1410 is also used as a liquid injection hole, which simplifies the production process of the housing 1000 and reduces the production cost. When injected from the through hole, the electrolyte may be dispersed by the first body 1421 and the liquid stopper 1424 in the first body 1421, which thus reduces the impact on the cell assembly (such as the electrode sheets and the separator) in the containment chamber 1300, protects the cell assembly, and at the same time facilitates the infiltration of the electrolyte and improves the battery performance.

Please refer to FIG. 4B. According to some embodiments of this disclosure, the housing 1000 includes a housing body 1200 with an opening and an end cover 1100 covering at the opening. A containment chamber 1300 is formed between the housing body 1200 and the end cover 1100. In this case, the liquid retaining structure 1420 is integrated with the end cover 1100 or installed on the end cover 1100 through a fastener.

The fastener may be, but is not limited to, an adhesive layer, a snap structure or a screw structure, etc.

The liquid retaining structure 1420 being integrated with the end cover 1100 may simplify the production process of the housing 1000. The liquid retaining structure 1420 being installed on the end cover 1100 through a fastener may increase the flexibility in using the housing 1000. In the case where the liquid retaining structure 1420 is damaged, it can be replaced in time so as to reduce the maintenance cost.

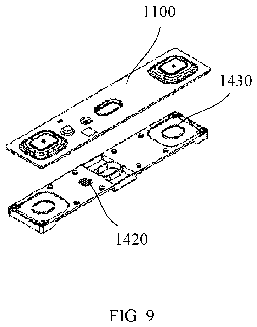

Please refer to FIG. 9, which is a schematic explosive view of a gas withdrawal structure 1400 of some embodiments of this disclosure. According to some embodiments of this disclosure, the gas withdrawal structure 1400 further includes: a second body 1430 engaging with the end cover 1100, installed on the end cover 1100 through a fastener. In this case, the liquid retaining structure 1420 is integrated with the second body 1430.

The second body 1430 may be, but not limited to, plastic. The fastener may be, but is not limited to, an adhesive layer, a snap structure or a screw structure, etc.

The liquid retaining structure 1420 is integrated with the second body 1430, and the second body 1430 is installed on the end cover 1100 through a fastener. It is possible to replace the liquid retaining structure 1420 in time when it is damaged, reducing the maintenance cost. The liquid retaining structure 1420 cooperates with the end cover 1100 through the second body 1430, which increases the operation area of the liquid retaining structure 1420 and the end cover 1100, reduces the probability of damage at the interface between the liquid retaining structure 1420 and the end cover 1100, and increases the service life of the housing 1000.

Please refer to FIG. 7 and FIG. 8. In specific embodiments, the liquid retaining structure 1420 may be a rectangular structure with side lengths greater than or equal to 5 mm and less than or equal to 10 mm. The first through hole 1422 may be located at the first end 1421A, the second through hole 1423 may be located on a side wall of the second end 1421B and the first end 1421A, and the second end 1421B may be a closed end (FIG. 7) or provided with a third through hole 1425 (FIG. 8). The first through hole 1422 is in communication with the gas withdrawal hole. The second through hole 1423 and the third through hole 1425 may be in the shape of a regular grid, and the size of each grid may be greater than or equal to 1 mm and less than or equal to 3 mm. Multiple small spheres may be contained inside the first body 1421, the number of the small spheres may be 3 to 5, the diameter of the spheres may be greater than the inner diameters of the second through hole 1423 and of the third through hole 1425, and may be greater than or equal to 1.5 mm and less than or equal to 3.5 mm. The small spheres are made of a lightweight, corrosion-resistant polymer material.

In the case where the gases are withdrawn from the inside of the housing 1000, during the discharge of the gases through the passage consisting of the second through hole 1423, the first body 1421 and the first through hole 1422, or through the passage consisting of the second through hole 1423, the third through hole 1425, the first body 1421 and the first through hole 1422, the gas flow will drive the small spheres to move around in random patterns in the first body 1421. When the suction force is strong, the electrolyte in the containment chamber 1300 will also be sucked and move towards the gas withdrawal hole 1410 until the electrolyte hits the small spheres which are moving around in random patterns at a high speed, thereby the electrolyte will change its movement direction to spread out, and finally fall back into the containment chamber 1300. When the gases in the housing 1000 have been totally withdrawn, the small spheres will gather at the gas withdrawal hole due to the suction force, further preventing the electrolyte from being withdrawn, thereby reducing the amount of electrolyte loss in the formation process.

Some embodiments of this disclosure provide a battery cell including the housing for a battery cell in the above embodiments.

Some embodiments of this disclosure provide a battery including the battery cell of the above embodiments.

Some embodiments of this disclosure provide an electric device including the battery of the above embodiment, where the battery is used to supply electrical power to the electric device.

Finally, it should be noted that the above embodiments are used only to illustrate the technical solutions of the present disclosure, rather than limit it.

## Claims

1. A housing (1000) for a battery cell (120), wherein a containment chamber (1300) is formed inside the housing (1000) for containing electrolyte, the housing (1000) comprises a gas withdrawal structure (1400), through which gases in the containment chamber (1300) can be withdrawn, and the gas withdrawal structure (1400) comprises:
a gas withdrawal hole (1410) arranged on the housing (1000); and
a liquid retaining structure (1420) cooperating with the gas withdrawal hole (1410), arranged in the containment chamber (1300), the liquid retaining structure (1420) being configured to prevent the electrolyte from being withdrawn from the gas withdrawal hole (1410),
wherein the liquid retaining structure (1420) comprises:
a first body (1421), which is a hollow structure;
a liquid stopper (1424) arranged in the first body (1421);
a first through hole (1422) and at least one second through hole (1423) arranged on the first body (1421) and in communication with the inside of the first body (1421), the first through hole (1422) being in communication with the gas withdrawal hole (1410), wherein the liquid stopper (1424) is configured to prevent the electrolyte, which has entered into the first body (1421) through the at least one second through hole (1423), from being withdrawn from the gas withdrawal hole (1410);
wherein the liquid stopper (1424) comprises multiple spheres, which are configured to move around in random patterns within the first body (1421) to prevent the electrolyte from being withdrawn from the gas withdrawal hole (1410).

2. The housing (1000) according to claim 1, wherein the first body (1421) comprises an opposite first end (1421A) and a second end (1421B), the first through hole (1422) is arranged on the first end (1421A), and the at least one second through hole (1423) is arranged on a side wall of the first body (1421) between the first end (1421A) and the second end (1421B).

3. The housing (1000) according to claim 2, wherein the second end (1421B) is a closed end, or the second end (1421B) is provided with multiple third through holes (1425), optionally, wherein each of the spheres has a diameter greater than an inner diameter of the third through holes (1425).

4. The housing (1000) according to claim 1, wherein each of the spheres has a diameter greater than an inner diameter of the second through holes (1423).

5. The housing (1000) according to any one of claims 1, 3 and 4, wherein number of the multiple spheres is 2 to 20, optionally, wherein the number of the multiple spheres is 3 to 5.

6. The housing (1000) according to any one of claims 1, 3 and 4, wherein each of the spheres has a diameter greater than an inner diameter of the gas withdrawal holes (1410).

7. The housing (1000) according to any one of claims 1-6, wherein the housing (1000) further comprises a liquid injection hole through which the electrolyte is injected into the containment chamber (1300), the gas withdrawal hole (1410) and the liquid injection hole are a same hole on the housing (1000) in communication with the containment chamber (1300).

8. The housing (1000) according to any one of claims 1-7, wherein the housing (1000) comprises a housing body (1200) with an opening and an end cover (1100) covering at the opening, the containment chamber (1300) is formed between the housing body (1200) and the end cover (1100),
wherein the liquid retaining structure (1420) is integrated with the end cover (1100) or installed on the end cover (1100) through a fastener, optionally, wherein the gas withdrawal structure (1400) further comprises:
a second body (1430) engaging with the end cover (1100), installed on the end cover (1100) through a fastener,
wherein the liquid retaining structure (1420) is integrated with the second body (1430).

9. A battery cell (120) comprising the housing (1000) according to any one of claims 1-8.

10. A battery (100) comprising the battery cell (120) according to claim 9.

11. An electric device comprising the battery according to claim 10, wherein the battery is used to supply electrical power.

## Patentansprüche

1. Gehäuse (1000) für eine Batteriezelle (120), wobei eine Aufnahmekammer (1300) im Inneren des Gehäuses (1000) zum Aufnehmen von Elektrolyt ausgebildet ist, wobei das Gehäuse (1000) eine Gasentnahmestruktur (1400) umfasst, durch die Gase in der Aufnahmekammer (1300) entnommen werden können, und die Gasentnahmestruktur (1400) Folgendes umfasst:
ein Gasentnahmeloch (1410), das an dem Gehäuse (1000) angeordnet ist; und
eine Flüssigkeitsrückhaltestruktur (1420), die mit dem Gasentnahmeloch (1410) zusammenwirkt, das in der Aufnahmekammer (1300) angeordnet ist, wobei die Flüssigkeitsrückhaltestruktur (1420) konfiguriert ist, um zu verhindern, dass der Elektrolyt aus dem Gasentnahmeloch (1410) entnommen wird,
wobei die Flüssigkeitsrückhaltestruktur (1420) Folgendes umfasst:
einen ersten Körper (1421), der eine hohle Struktur ist;
einen Flüssigkeitsstopper (1424), der in dem ersten Körper (1421) angeordnet ist;
ein erstes Durchgangsloch (1422) und mindestens ein zweites Durchgangsloch (1423), die an dem ersten Körper (1421) angeordnet sind und mit dem Inneren des ersten Körpers (1421) in Verbindung stehen, wobei das erste Durchgangsloch (1422) mit dem Gasentnahmeloch (1410) in Verbindung steht, wobei der Flüssigkeitsstopper (1424) konfiguriert ist, um zu verhindern, dass der Elektrolyt, der durch das mindestens eine zweite Durchgangsloch (1423) in den ersten Körper (1421) eingedrungen ist, aus dem Gasentnahmeloch (1410) entnommen wird;
wobei der Flüssigkeitsstopper (1424) mehrere Kugeln umfasst, die konfiguriert sind, um sich innerhalb des ersten Körpers (1421) in zufälligen Mustern zu bewegen, um zu verhindern, dass der Elektrolyt aus dem Gasentnahmeloch (1410) entnommen wird.

2. Gehäuse (1000) nach Anspruch 1, wobei der erste Körper (1421) ein gegenüberliegendes erstes Ende (1421A) und ein zweites Ende (1421B) umfasst, wobei das erste Durchgangsloch (1422) am ersten Ende (1421A) angeordnet ist und das mindestens eine zweite Durchgangsloch (1423) an einer Seitenwand des ersten Körpers (1421) zwischen dem ersten Ende (1421A) und dem zweiten Ende (1421B) angeordnet ist.

3. Gehäuse (1000) nach Anspruch 2, wobei das zweite Ende (1421B) ein geschlossenes Ende ist oder das zweite Ende (1421B) mit mehreren dritten Durchgangslöchern (1425) versehen ist, optional wobei jede der Kugeln einen Durchmesser aufweist, der größer ist als ein innerer Durchmesser der dritten Durchgangslöcher (1425).

4. Gehäuse (1000) nach Anspruch 1, wobei jede der Kugeln einen Durchmesser aufweist, der größer ist als ein innerer Durchmesser der zweiten Durchgangslöcher (1423).

5. Gehäuse (1000) nach einem der Ansprüche 1, 3 und 4, wobei die Anzahl der mehreren Kugeln 2 bis 20 beträgt, optional wobei die Anzahl der mehreren Kugeln 3 bis 5 beträgt.

6. Gehäuse (1000) nach Anspruch 1, 3 und 4, wobei jede der Kugeln einen Durchmesser aufweist, der größer ist als ein innerer Durchmesser der Gasentnahmelöcher (1410).

7. Gehäuse (1000) nach einem der Ansprüche 1 bis 6, wobei das Gehäuse (1000) ferner ein Flüssigkeitseinspritzloch umfasst, durch das der Elektrolyt in die Aufnahmekammer (1300) eingespritzt wird, wobei das Gasentnahmeloch (1410) und das Flüssigkeitseinspritzloch ein gleiches Loch am Gehäuse (1000) sind, das mit der Aufnahmekammer (1300) in Verbindung steht.

8. Gehäuse (1000) nach Anspruch 1 bis 7, wobei das Gehäuse (1000) einen Gehäusekörper (1200) mit einer Öffnung und eine die Öffnung abdeckende Endabdeckung (1100) umfasst, wobei die Aufnahmekammer (1300) zwischen dem Gehäusekörper (1200) und der Endabdeckung (1100) ausgebildet ist,
wobei die Flüssigkeitsrückhaltestruktur (1420) in die Endabdeckung (1100) integriert oder durch ein Befestigungselement an der Endabdeckung (1100) installiert ist, optional wobei die Gasentnahmestruktur (1400) ferner Folgendes umfasst:
einen zweiten Körper (1430), der in die Endabdeckung (1100) eingreift und durch ein Befestigungselement an der Endabdeckung (1100) installiert ist,
wobei die Flüssigkeitsrückhaltestruktur (1420) in den zweiten Körper (1430) integriert ist.

9. Batteriezelle (120), umfassend das Gehäuse (1000) nach einem der Ansprüche 1 bis 8.

10. Batterie (100), umfassend die Batteriezelle (120) nach Anspruch 9.

11. Elektrische Vorrichtung, umfassend die Batterie nach Anspruch 10, wobei die Batterie zur Bereitstellung elektrischer Energie verwendet wird.

## Revendications

1. Boîtier (1000) pour élément de batterie (120), une chambre de confinement (1300) étant formée à l'intérieur du boîtier (1000) pour confiner de l'électrolyte, le boîtier (1000) comprenant une structure d'extraction de gaz (1400), par laquelle les gaz se trouvant dans la chambre de confinement (1300) peuvent être extraits, et la structure d'extraction de gaz (1400) comprenant :
un trou d'extraction de gaz (1410) aménagé sur le boîtier (1000) ; et
une structure de retenue de liquide (1420) coopérant avec le trou d'extraction de gaz (1410), disposée dans la chambre de confinement (1300), la structure de retenue de liquide (1420) étant configurée pour empêcher l'extraction de l'électrolyte par le trou d'extraction de gaz (1410),
dans lequel la structure de retenue de liquide (1420) comprend :
un premier corps (1421), qui est une structure creuse ;
un bouchon de liquide (1424) disposé dans le premier corps (1421) ;
un premier trou traversant (1422) et au moins un deuxième trou traversant (1423) disposés sur le premier corps (1421) et en communication avec l'intérieur du premier corps (1421), le premier trou traversant (1422) étant en communication avec le trou d'extraction de gaz (1410), dans lequel le bouchon de liquide (1424) est configuré pour empêcher l'extraction de l'électrolyte, qui est entré dans le premier corps (1421) par l'au moins un deuxième trou traversant (1423), hors du trou d'extraction de gaz (1410) ;
dans lequel le bouchon de liquide (1424) comprend de multiples sphères, configurées pour se déplacer en des formes aléatoires au sein du premier corps (1421) afin d'empêcher l'extraction de l'électrolyte hors du trou d'extraction du gaz (1410).

2. Boîtier (1000) selon la revendication 1, dans lequel le premier corps (1421) comprend une première extrémité opposée (1421A) et une seconde extrémité (1421B), le premier trou traversant (1422) étant disposé sur la première extrémité (1421A), et l'au moins un deuxième trou traversant (1423) étant disposé sur une paroi latérale du premier corps (1421) entre la première extrémité (1421A) et la seconde extrémité (1421B).

3. Boîtier (1000) selon la revendication 2, dans lequel la seconde extrémité (1421B) est une extrémité fermée, ou la seconde extrémité (1421B) est dotée de multiples troisièmes trous traversants (1425), éventuellement, dans lequel chacune des sphères a un diamètre supérieur à un diamètre intérieur des troisièmes trous traversants (1425).

4. Boîtier (1000) selon la revendication 1, dans lequel chacune des sphères a un diamètre supérieur à un diamètre intérieur des deuxièmes trous traversants (1423).

5. Boîtier (1000) selon l'une quelconque des revendications 1, 3 et 4, dans lequel le nombre des multiples sphères est de 2 à 20, éventuellement, dans lequel le nombre des multiples sphères est de 3 à 5.

6. Boîtier (1000) selon l'une quelconque des revendications 1, 3 et 4, dans lequel chacune des sphères a un diamètre supérieur à un diamètre intérieur des trous d'extraction de gaz (1410).

7. Boîtier (1000) selon l'une quelconque des revendications 1 à 6, le boîtier (1000) comprenant en outre un trou d'injection de liquide par lequel l'électrolyte est injecté dans la chambre de confinement (1300), dans lequel le trou d'extraction de gaz (1410) et le trou d'injection de liquide sont un même trou sur le boîtier (1000) en communication avec la chambre de confinement (1300).

8. Boîtier (1000) selon l'une quelconque des revendications 1 à 7, le boîtier (1000) comprenant un corps de boîtier (1200) présentant une ouverture et un couvercle d'extrémité (1100) recouvrant l'ouverture, dans lequel la chambre de confinement (1300) est formée entre le corps de boîtier (1200) et le couvercle d'extrémité (1100),
dans lequel la structure de retenue de liquide (1420) est intégrée au couvercle d'extrémité (1100) ou installée sur le couvercle d'extrémité (1100) par le biais d'une fixation, éventuellement, dans lequel la structure d'extraction de gaz (1400) comprend en outre :
un second corps (1430) se mettant en prise avec le couvercle d'extrémité (1100), installé sur le couvercle d'extrémité (1100) par le biais d'une fixation,
dans lequel la structure de retenue de liquide (1420) est intégrée au second corps (1430).

9. Élément de batterie (120) comprenant le boîtier (1000) selon l'une quelconque des revendications 1 à 8.

10. Batterie (100) comprenant l'élément de batterie (120) selon la revendication 9.

11. Dispositif électrique comprenant la batterie selon la revendication 10, dans lequel la batterie est utilisée pour fournir de l'énergie électrique.
